(19) Europäisches Patentamt
European Patent Office
Office européen des brevets

(11) **EP 0 696 300 B1**

(12) **EUROPEAN PATENT SPECIFICATION**

(45) Date of publication and mention
of the grant of the patent:
**23.12.1998  Bulletin 1998/52**

(21) Application number: **94914235.0**

(22) Date of filing: **19.04.1994**

(51) Int Cl.$^6$: **C08L 23/16**

(86) International application number:
**PCT/US94/04406**

(87) International publication number:
**WO 94/25523 (10.11.1994 Gazette 1994/25)**

(54) **FABRICATED ARTICLES MADE FROM ETHYLENE POLYMER BLENDS**

PRODUKTE AUS ETHYLENENPOLYMERGEMISCHEN

ARTICLES FABRIQUES A PARTIR DE MELANGES DE POLYMERES D'ETHYLENE

(84) Designated Contracting States:
**AT BE CH DE DK ES FR GB IT LI NL PT SE**

(30) Priority: **28.04.1993  US 54379**

(43) Date of publication of application:
**14.02.1996  Bulletin 1996/07**

(73) Proprietor: **THE DOW CHEMICAL COMPANY
Midland, Michigan 48674 (US)**

(72) Inventors:
• **CHUM, Pak, Wing, Steve
Lake Jackson, TX 77566 (US)**
• **MARKOVICH, Ronald, P.
Friendswood, TX 77546 (US)**
• **KNIGHT, George, W.
Lake Jackson, TX 77566 (US)**
• **LAI, Shih-Yaw
Sugar Land, TX 77479 (US)**

(74) Representative:
**Smulders, Theodorus A.H.J., Ir. et al
Vereenigde Octrooibureaux
Nieuwe Parklaan 97
2587 BN 's-Gravenhage (NL)**

(56) References cited:
**EP-A- 0 572 034**

Remarks:
The file contains technical information submitted
after the application was filed and not included in this
specification

## Description

Thin film products fabricated from linear low density polyethylene (LLDPE) and/or high density polyethylene (HDPE) are widely used for packaging applications such as merchandise bags, grocery sacks, and industrial liners. For these applications, films with high tensile strength, as well as high impact strength, are desired because film producers can down gauge their film products and still retain packaging performance.

Previous attempts were made to optimize film tensile strength and yield strength by blending various heterogeneous polymers together on theoretical basis. While such blends exhibited a synergistic response to increase the film yield strength, the film impact strength followed the rule of mixing, often resulting in a "destructive synergism" (i.e., the film impact strength was actually lower than film made from one of the two components used to make the blend).

For example, it is known that while improved modulus linear polyethylene resin can be produced by blending high density polyethylene with a very low density polyethylene (VLDPE), the impact strength of the resin blend follows the rule of mixing.

EP-A-0572034, only relevant for novelty, describes a blend for producing films, comprising an ethylene-$\alpha$-olefin copolymer (a) in an amount of 40-5 wt. %, having a melt index of 0.1 to 30 g/10 min., a density of 0.88 to 0.94 g/cc, a width of dependence of number of branches on molecular weight of 0 to 5/1000 carbons, a molecular weight distribution of 2 to 6 and a single melting peak as measured with DSC and (b) 60-95 wt. % of an ethylene-$\alpha$-olefin copolymer having a density of 0.900 to 0.940 g/cc and number of branches of 10 to 40/1000 carbon.

There is a continuing need to develop polymers which can be formed into fabricated articles having these combinations of properties (e.g., improved modulus, yield strength, impact strength and tear strength, preferably greater dart impact for a given yield strength in the case of films and greater IZOD impact for molded parts). The need is especially great for polymers which can be made into film which can also be down gauged without loss of strength properties, resulting in savings for film manufacturers and consumers, as well as protecting the environment by source reduction.

Surprisingly, we have now discovered compositions useful in films and molded parts having synergistically enhanced physical properties, which compositions comprise a blend of at least one homogeneously branched ethylene/$\alpha$-olefin interpolymer and at least one heterogeneously branched ethylene/$\alpha$-olefin interpolymer.

In particular, formulated ethylene/$\alpha$-olefin compositions have now been discovered to have improved physical and mechanical strength and are useful in making fabricated articles. Films made from these novel compositions exhibit surprisingly good impact and tensile properties, and an especially good combination of modulus, yield, ultimate tensile, and toughness (e.g, dart impact).

The compositions comprise from 10 percent (by weight of the total composition) to 95 percent (by weight of the total composition) of :

(A) at least one homogeneously branched substantially linear ethylene/$\alpha$-olefin interpolymer having:

(i) a density from 0.88 grams/cubic centimeter (g/cm$^3$) to 0.935 g/cm$^3$,
(ii) a molecular weight distribution ($M_w/M_n$) from 1.8 to 2.8,
(iii) a melt index ($I_2$) from 0.001 grams/10 minutes (g/10 min) to 10 g/10 min,
(iv) no linear polymer fraction, and
(v) a single melting peak as measured using differential scanning calorimetry; and

(B) at least one heterogeneously branched ethylene polymer having a density from 0.91 g/cm$^3$ to 0.965 g/cm$^3$.

In another aspect, the compositions comprise from 10 percent (by weight of the total composition) to 95 percent (by weight of the total composition) of :

(A) at least one homogeneously branched linear ethylene/$\alpha$-olefin interpolymer having :

(i) a density from 0.88 grams/cubic centimeter (g/cm$^3$) to 0.935 g/cm$^3$,
(ii) a molecular weight distribution ($M_w/M_n$) from 1.8 to 2.8,
(iii) a melt index ($I_2$) from 0.001 grams/10 minutes (g/10 min) to 10 g/10 min,
(iv) no linear polymer fraction,
(v) a single melting peak as measured using differential scanning calorimetry,
(vi) a short chain branching distribution index (SCBDI) of greater than 50 percent, and
(vii) a slope of strain hardening coefficient of from 1.3 to 10 ; and

(B) at least one heterogeneously branched ethylene polymer having a density from 0.91 g/cm$^3$ to 0.965 g/cm$^3$.

In another aspect, the invention provides a composition, particularly useful as a sealant layer for barrier bags comprising an ethylene polymer composition comprising from 30 to 40 percent (by weight of the total composition) of at least one homogeneously branched linear or substantially linear ethylene/$\alpha$-olefin interpolymer having a melt index of from 2.5 to 4 g/10 minutes and a density of from 0.89 to 0.91 g/cm$^3$, and from 60 to 70 percent (by weight of the total composition) of a heterogeneously branched ethylene/$\alpha$-olefin interpolymer having a melt index of from 2.5 to 4 g/10 minutes and a density of from 0.91 to 0.93 g/cm$^3$, wherein said composition is characterized by a melt index of from 2.5 to 4 g/10 minutes and by a density of from 0.89 to 0.92 g/cm$^3$, while the homogeneously branched linear ethylene/$\alpha$-olefin interpolymer has a slope of strain hardening coefficient of from 1.3 to 10.

In another aspect, the invention provides a composition particularly useful as a sealant layer for lamination comprising an ethylene polymer composition comprising from 40 to 50 percent (by weight of the total composition) of at least one homogeneously branched linear or substantially linear ethylene/$\alpha$-olefin interpolymer having a melt index of from 0.7 to 1.3 g/10 minutes and a density of from 0.89 to 0.91 g/cm$^3$, and from 50 to 60 percent (by weight of the total composition) of a heterogeneously branched ethylene/$\alpha$-olefin interpolymer having a melt index of from 2.3 to 3.7 g/10 minutes and a density of from 0.91 to 0.935 g/cm$^3$, wherein said composition is characterized by a melt index of from 1.5 to 2.5 g/10 minutes and by a density of from 0.90 to 0.93 g/cm$^3$, while the homogeneously branched linear ethylene/$\alpha$-olefin interpolymer has a slope of strain hardening coefficient of from 1.3 to 10.

In another aspect, the invention provides a composition particularly useful for liners characterized by good impact and tensile strength and modulus, comprising an ethylene polymer composition comprising from 30 to 40 percent (by weight of the total composition) of at least one homogeneously branched linear or substantially linear ethylene/$\alpha$-olefin interpolymer having a melt index of from 0.3 to 0.7 g/10 minutes and a density of from 0.88 to 0.91 g/cm$^3$, and from 60 to 70 percent (by weight of the total composition) of a heterogeneously branched ethylene/$\alpha$-olefin interpolymer having a melt index of from 0.8 to 1.4 g/10 minutes and a density of from 0.92 to 0.94 g/cm$^3$, wherein said composition is characterized by a melt index of from 0.7 to 1 g/10 minutes and by a density of from 0.90 to 0.93 g/cm$^3$, while the homogeneously branched linear ethylene/ $\alpha$-olefin interpolymer has a slope of strain hardening coefficient of from 1.3 to 10.

Preferably, both the homogeneously branched substantially linear ethylene/$\alpha$-olefin interpolymer and the homogeneously branched linear ethylene/$\alpha$-olefin interpolymer each have a slope of strain hardening coefficient greater than or equal to 1.3.

These and other embodiments are more fully described in the following detailed descriptions, wherein:

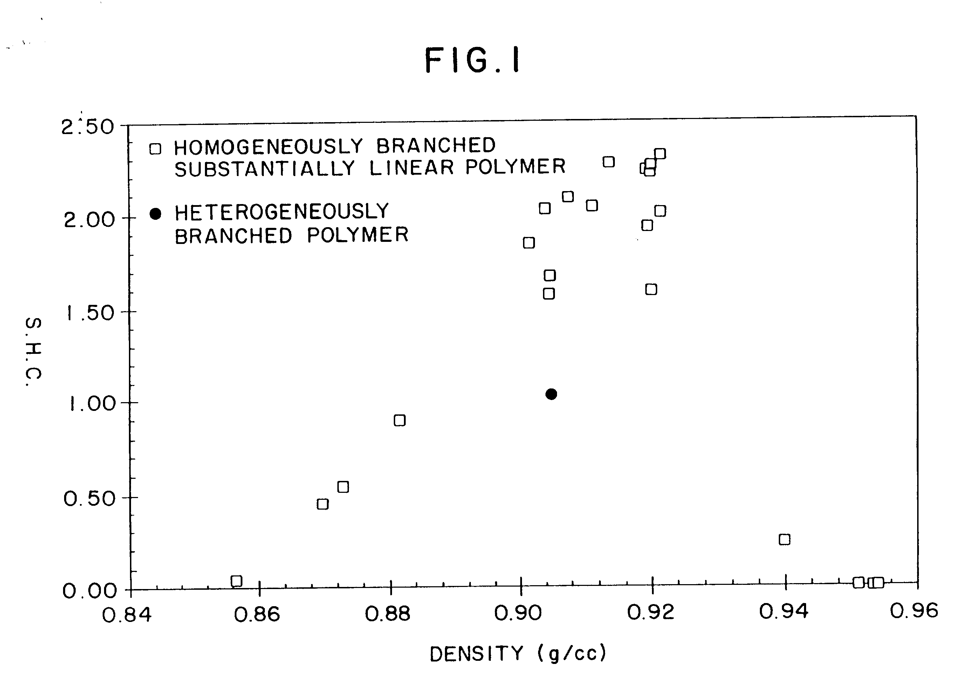

Figure 1 shows the relationship between the density and the slope of strain hardening coefficient for homogeneously branched substantially linear ethylene/$\alpha$-olefin interpolymers used in the compositions disclosed herein, in comparison with a heterogeneously branched ethylene/$\alpha$-olefin copolymer; and

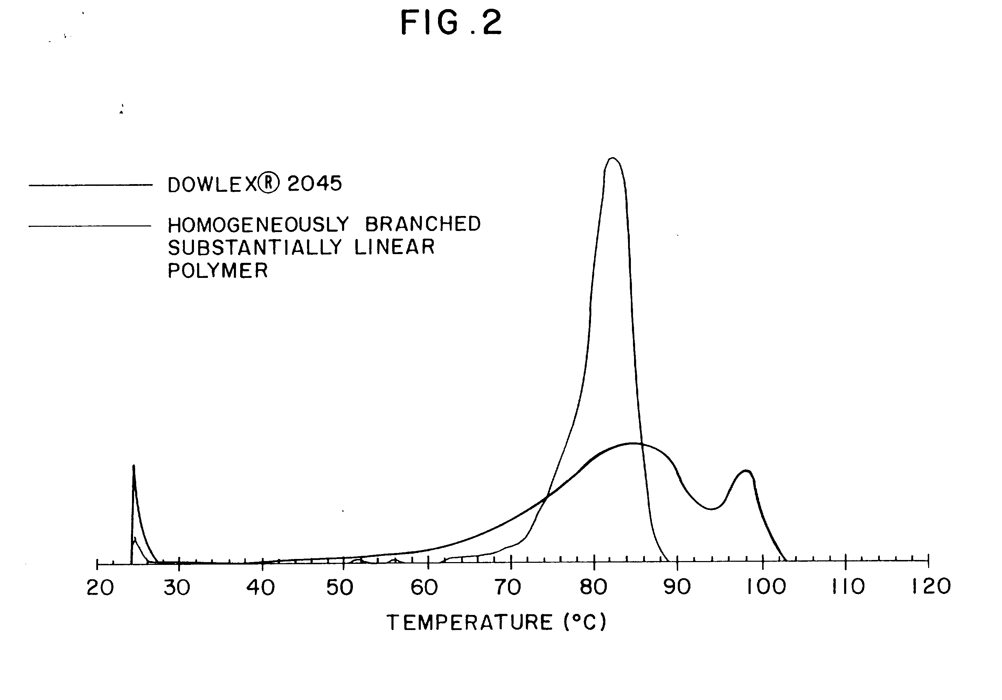

Figure 2 shows the short chain branching distribution (as measured by analytical temperature rising elution fractionation (ATREF)) for a homogeneously branched substantially linear ethylene/1-octene copolymer used in the invention, in comparison with Dowlex$^{TM}$ 2045 (a heterogeneously branched ethylene/1-octene copolymer made by The Dow Chemical Company).

<u>The Homogeneously Branched Ethylene Polymer</u>

The homogeneously branched ethylene/$\alpha$-olefin interpolymers useful for forming the compositions described herein are those in which the comonomer is randomly distributed within a given interpolymer molecule and wherein substantially all of the interpolymer molecules have the same ethylene/comonomer ratio within that interpolymer. The homogeniety of the interpolymers is typically described by the SCBDI (Short Chain Branch Distribution Index) or CDBI (Composition Distribution Branch Index) and is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as "TREF") as described, for example, in Wild et al, <u>Journal</u> <u>of</u> <u>Polymer</u> <u>Science,</u> <u>Poly.</u> <u>Phys.</u> <u>Ed.,</u> Vol. 20, p. 441 (1982), in U.S. Patent 4,798,081 (Hazlitt et al.), or in U.S. Patent 5,089,321 (Chum et al.). The SCBDI or CDBI for the linear and for the substantially linear olefin polymers of the present invention is preferably greater than 3U percent, especially greater than 50 percent. The homogeneous ethylene/$\alpha$-olefin polymers used in this invention essentially lack a measurable "high density" fraction as measured by the TREF technique (i.e., the homogeneously branched ethylene/$\alpha$-olefin polymers do not contain a polymer fraction with a degree of branching less than or equal to 2 methyls/1000 carbons). The homogeneously branched ethylene/$\alpha$-olefin polymers also do not contain any highly short chain branched fraction (i.e., the homogeneously branched ethylene/$\alpha$-olefin polymer do not contain a polymer fraction with a degree of branching equal to or more than 30 methyls/1000 carbons).

The homogeneously branched ethylene/$\alpha$-olefin interpolymers for use in the present invention typically are interpolymers of ethylene with at least one $C_3$-$C_{20}$ $\alpha$-olefin and/or $C_4$-$C_{18}$ diolefins. Copolymers of ethylene and 1-octene are especially preferred. The term "interpolymer" is used herein to indicate a copolymer, or a terpolymer, or the like. That is, at least one other comonomer is polymerized with ethylene to make the interpolymer. Ethylene copolymerized with two or more comonomers can also be used to make the homogeneously branched ethylene/$\alpha$-olefin interpolymers useful in this invention. Preferred comonomers include the $C_3$-$C_{20}$ $\alpha$-olefins, especially propene, isobutylene, 1-butene, 1-hexene, 4-methyl-1- pentene, 1-heptene, 1-octene, 1-nonene, and 1-decene, more preferably 1-butene, 1-hexene, 4-methyl-1-pentene and 1-octene.

The homogeneously branched ethylene/$\alpha$-olefin interpolymer is preferably a homogeneously branched substantially linear ethylene/a $\alpha$-olefin interpolymer as described in U. S. Patent No. 5,272,236. The homogeneously branched ethylene/$\alpha$-olefin interpolymer can also be a linear ethylene/$\alpha$-olefin interpolymer as described in U. S. Patent No. 3,645,992 (Elston).

The substantially linear ethylene/$\alpha$-olefin interpolymers are not "linear" polymers in the traditional sense of the term, as used to describe linear low density polyethylene (e.g., Ziegler polymerized linear low density polyethylene (LLDPE)), nor are they highly branched polymers, as used to describe low density polyethylene (LDPE). Rather, the substantially linear ethylene/$\alpha$-olefin interpolymers of the present invention are as described in US Patent No. 5,272,236. In particular, "substantially linear" means that the polymer backbone is substituted with from 0.01 long-chain branches/1000 carbons to 3 long-chain branches/1000 carbons, preferably from 0.01 long-chain branche/1000 carbons to 1 long-chain branch/1000 carbons, more preferably from 0.05 long-chain branches/1000 carbons to 1 long-chain branch/1000 carbons, still more preferably from 0.1 long chain branches/1000 carbons to 3 long-chain branches/1000 carbons. Long-chain branching is here defines as a chain length of at least 6 carbon atoms, above which the length cannot be distinguished using $^{13}$C-nuclear magnetic resonance spectroscopy, yet the long-chain branch can be about the same length as the length of the polymer backbone.

Substantially linear ethylene/$\alpha$-olefin interpolymers are prepared using constrained geometry catalyst as described in U. S. Patent No. 5,272,236.

The term "linear ethylene/$\alpha$-olefin interpolymer" means that the interpolymer does not have long chain branching. That is, the linear ethylene/$\alpha$-olefin interpolymer has an absence of long chain branching, as for example the linear low density polyethylene polymers or linear high density polyethylene polymers made using uniform (i.e., homogeneous) branching distribution polymerization processes such as is described in U. S. Patent No. 3,645,992. Linear ethylene/$\alpha$-olefin interpolymers are those in which the comonomer is randomly distributed within a given interpolymer molecule and wherein substantially all of the interpolymer molecules have the same ethylene/comonomer ratio within that interpolymer. The term "linear ethylene/$\alpha$-olefin interpolymer" does not refer to high pressure branched (free-radical polymerized) polyethylene which is known to those skilled in the art to have numerous long chain branches. The branching distribution of the homogeneously branched linear ethylene/$\alpha$-olefin interpolymers is the same or substantially the same as that described for the homogeneously branched substantially linear ethylene/$\alpha$-olefin interpolymers, with the exception that the linear ethylene/$\alpha$-olefin interpolymers do not have any long chain branching.

Both the homogeneously branched substantially linear and linear ethylene/$\alpha$-olefin interpolymers have a single melting point, as opposed to traditional heterogeneously branched Ziegler polymerized ethylene/$\alpha$-olefin copolymers having two or more melting points, as determined using differential scanning calorimetry (DSC).

The density of the homogeneously branched linear or substantially linear ethylene/$\alpha$-olefin interpolymers (as measured in accordance with ASTM D-792) for use in the present invention is generally from 0.89 g/cm$^3$ to 0.935 g/cm$^3$, preferably from 0.9 g/cm$^3$ to 0.92 g/cm$^3$.

The amount of the homogeneously branched linear or substantially linear ethylene/$\alpha$-olefin polymer incorporated into the composition varies depending upon the heterogeneously branched ethylene polymer to which it is combined. However, about 50 percent (by weight of the total composition) of the homogeneous linear or substantially linear ethylene/$\alpha$-olefin polymer is especially preferred in the novel compositions disclosed herein.

The molecular weight of the homogeneously branched linear or substantially linear ethylene/$\alpha$-olefin interpolymers for use in the present invention is conveniently indicated using a melt index measurement according to ASTM D-1238, Condition 190° C/2.16 kg (formerly known as "Condition (E)" and also known as $I_2$). Melt index is inversely proportional to the molecular weight of the polymer. Thus, the higher the molecular weight, the lower the melt index, although the relationship is not linear. The lower melt index limit for the homogeneously branched linear or substantially linear ethylene/$\alpha$-olefin interpolymers useful herein is generally 0.001 grams/10 minutes (g/10 min). The upper melt index limit for the homogeneously branched linear or substantially linear ethylene/$\alpha$-olefin interpolymers is typically 10 g/10 min, preferably less than 1 g/10 min, and especially less than 0.5 g/10 min.

Another measurement useful in characterizing the molecular weight of the homogeneously branched linear or substantially linear ethylene/$\alpha$-olefin interpolymers is conveniently indicated using a melt index measurement according to ASTM D-1238, Condition 190°C/10 kg (formerly known as "Condition (N)" and also known as $I_{10}$). The ratio of the $I_{10}$ and $I_2$ melt index terms is the melt flow ratio and is designated as $I_{10}/I_2$. Generally, the $I_{10}/I_2$ ratio for the homogeneously branched linear ethylene/$\alpha$-olefin interpolymers is about 5.6. For the homogeneously branched substantially linear ethylene/ $\alpha$-olefin interpolymers used in the compositions of the invention, the $I_{10}/I_2$ ratio indicates the degree of long chain branchina, i.e.,the higher the $I_{10}/I_2$ ratio, the more long chain branching in the interpolymer. Generally, the $I_{10}/I_2$ ratio of the homogeneously branched substantially linear ethylene/α-olefin interpolymers is at least 6, preferably at least 7, especially at least 8. For the homogeneously branched substantially linear ethylene/α-olefin interpolymers, the higher the $I_{10}/I_2$ ratio, the better the processability.

Other additives such as antioxidants (e.g., hindered phenolics (e.g., Irganox® 1010 made by Ciba Geigy Corp.), phosphites (e.g., Irgafos® 168 also made by Ciba Geigy Corp.), cling additives (e.g., PIB), antiblock additives, pigments, fillers, and the like can also be included in the formulations, to the extent that they do not interfere with the enhanced formulation properties of the composition of the invention.

Molecular Weight Distribution Determination

The molecular weight distribution of the linear or substantially linear olefin interpolymer product samples is analyzed by gel permeation chromatography (GPC) on a Waters 150°C high temperature chromatographic unit equipped with three mixed porosity columns (Polymer Laboratories $10^3$, $10^4$, $10^5$, and $10^6$), operating at a system temperature of 140°C. The solvent is 1,2,4-trichlorobenzene, from which 0.3 percent by weight solutions of the samples are prepared for injection. The flow rate is 1.0 milliliter/minute and the injection size is 200 microliters. A differential refractometer is being used as the detector.

The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Word in Journal of Polymer Science, Polymer Letters, Vol. 6, (621) 1968, to derive the following equation:

$$M_{polyethylene} = a * (M_{polystyrene})^b.$$

In this equation, a = 0.4316 and b = 1.0. Weight average molecular weight, Mw, is calculated in the usual manner according to the following formula: $M_w = R\ w_i{}^* M_i$, where $w_i$ and $M_i$ are the weight fraction and molecular weight, respectively, of the $i^{th}$ fraction eluting from the GPC column.

For both the homogeneously branched linear and substantially linear ethylene/α-olefin polymers, the molecular weight distribution ($M_w/M_n$) is preferably from 1.8 to 2.8, more preferably from 1.89 to 2.2 and especially 2.

Determination of the slope of Strain Hardening Coefficient

The slope of strain hardening is measured by compression molding a plaque from the polymer to be tested. Typically, the plaque is molded at about 177°C for 4 minutes under almost no pressure and then pressed for 3 minutes under a pressure of about 200 psi (1400 kPa). The plaque is then allowed to cool at about 8°C/minute while still under 200 psi (1400 kPa) pressure. The molded plaque has a thickness of about 0.005 inches (0.01 cm). The plaque is then cut into a dogbone shaped test piece using a steel rule die. The test piece is 0.315 inches ( 0.08 cm) wide and 1.063 inches ( 2.7 cm) long. The start of the curved portion of the dogbone shape begins at 0.315 (0.8 cm) inches from each end of the sample and gently curves (i.e., tapers) to a width of 0.09 inches (0.2 cm). The curve ends at a point 0.118 inches (0.3 cm) from the start of the curve such that the interior portion of the dogbone test piece has a width of 0.09 inches (0.2 cm) and a length of 0.197 inches (0.5 cm).

The tensile properties of the test sample is tested on an Instron Tensile Tester at a crosshead speed of 1 inch/minute (2.5 cm/minute). The slope of strain hardening is calculated from the resulting tensile curve by drawing a line parallel to the strain hardening region of the resulting stress/strain curve. The strain hardening region occurs after the sample has pulled its initial load (i.e., stress) usually with little or no elongation during the intial load) and after the sample has gone through a slight drawing stage (usually with little or no increase in load, but with increasing elongation (i.e., strain)). In the strain hardening region, the load and the elongation of the sample both continue to increase. The load increases in the strain hardening region at a much lower rate than during the intial load region and the elongation also increase, again at a rate lower than that experienced in the drawing region. Figure 1 shows the various stages of the stress/strain curve used to calculate the slope of strain hardening. The slope of the parallel line in the strain hardening region is then determined.

The slope of strain hardening coefficient (SHC) is calculated according to the following equation:

$$SHC = (\text{slope of strain hardening}) * (I_2)^{0.25}$$

where $I_2$ = melt index in grams/10 minutes.

For both the homogeneously branched linear and substantially linear ethylene/α-olefin interpolymers used in the invention, the SHC is greater than 1.3, preferably greater than 1.5. Typically, the SHC will be less than 10, more typically less than 4, and most typically less than 2.5.

Surprisingly, the slope of strain hardening coefficient reaches a maximum for the linear or the substantially linear ethylene/ α-olefin polymers at a density from 0.89 $g/cm^3$ to 0.935 $g/cm^3$. Heterogeneous ethylene/α-olefin polymers, in contrast, do not behave in the same manner. Figure 1 graphically compares the density of the homogeneously branched substantially linear ethylene polymers and heterogeneously branched ethylene/α-olefin polymers (polymer W** in table I) as a function of their slope of strain hardening coefficient. Table 1 displays the data of Figure 1 in tabular form:

Table 1

| Polymer | Melt Index ($I_2$) (g/10 min) | Density (g/cm³) | $I_{10}/I_2$ | SHC* |
|---|---|---|---|---|
| A | 1 | 0.8564 | 7.36 | 0.004 |
| B | 1.03 | 0.8698 | 7.46 | 0.45 |
| C | 0.57 | 0.873 | 7.22 | 0.54 |
| D | 1.01 | 0.8817 | 7.36 | 0.89 |
| E | 1.06 | 0.9018 | 7.61 | 1.84 |
| F | 2.01 | 0.9041 | 8.07 | 2.03 |
| G | 0.77 | 0.9047 | 9.01 | 1.57 |
| H | 9.82 | 0.9048 | 7.03 | 1.67 |
| I | 4.78 | 0.9077 | 7.18 | 2.08 |
| J | 3.13 | 0.9113 | 7.67 | 2.04 |
| K | 2.86 | 0.9139 | 7.87 | 2.27 |
| L | 1.08 | 0.9197 | 8.07 | 2.24 |
| M | 0.96 | 0.9198 | 9.61 | 1.93 |
| N | 0.99 | 0.9203 | 9.09 | 2.23 |
| O | 1.11 | 0.9204 | 10.15 | 1.59 |
| P | 1.06 | 0.9205 | 9.08 | 2.25 |
| Q | 1.12 | 0.9216 | 8.94 | 2.3 |
| R | 30.74 | 0.9217 | 6.27 | 2 |
| S | 31.58 | 0.94 | 6.02 | 0.24 |
| T | 0.97 | 0.9512 | 12.11 | 0 |
| U | 0.97 | 0.9533 | 10.5 | 0 |
| V | 0.92 | 0.954 | 7.39 | 0 |
| W** | 0.8 | 0.905 | 8.7 | 1.02 |

*SHC = Slope of Strain Hardening Coefficient

**A comparative heterogeneously branched ethylene/1-octene copolymer

The Heterogeneously Branched Ethylene Polymer

The ethylene polymer to be combined with the homogeneous ethylene/α-olefin interpolymer is a heterogeneously branched (e.g., Ziegler polymerized) interpolymer of ethylene with at least one $C_3$-$C_{20}$ α-olefin (e.g., linear low density polyethylene (LLDPE)).

Heterogeneously branched ethylene/α-olefin interpolymers differ from the homogeneously branched ethylene/α-olefin interpolymers primarily in their branching distribution. For example, heterogeneously branched LLDPE polymers have a distribution of branching, including a highly branched portion (similar to a very low density polyethylene), a medium branched portion (similar to a medium branched polyethylene) and an essentially linear portion (similar to linear homopolymer polyethylene). The amount of each of these fractions varies depending upon the whole polymer properties desired.

Preferably, however, the heterogeneously branched ethylene polymer is a heterogeneously branched Ziegler polymerized ethylene/$\alpha$-olefin interpolymer having no more than about 10 percent (by weight of the polymer) of a polymer fraction having a SHC $\geq$ 1.3.

More preferably, the hererogeneously branched ethylene polymer is a copolymer of ethylene with a $C_3$-$C_{20}$ $\alpha$-olefin, wherein the copolymer has :

(i) a density from about 0.93 g/cm$^3$ to about 0.965 g/cm$^3$,
(ii) a melt index ($I_2$) from about 0.1 g/10 min to about 500 g/10 min, and
(iii) no more than about 10 percent (by weight of the polymer) of a polymer fraction having a SHC $\geq$ 1.3.

The heterogeneously branched ethylene/$\alpha$-olefin interpolymers and/or copolymers also have at least two melting peaks as determined using Differential scanning Calorimetry (DSC).

Examples of suitable heterogeneously branched ethylene/$\alpha$-olefin interpolymers include DOWLEX* 2030, 2038 and 2090 (all of which are characterized by a density of 0.935 g/cm$^3$ and an $I_2$ of 1 g/10 minutes), DOWLEX 2027 (characterized by a density of 0.941 g/cm$^3$ and an $I_2$ of 4 g/10 minutes), and DOWLEX 2089 (characterized by a density of 0.93 g/cm$^3$ and an $I_2$ of 0.8 g/10 minutes) all of which are available from The Dow Chemical Company. (*DOWLEX is a trademark of The Dow Chemical Company).

## The Formulated Compositions

The compositions disclosed herein can be formed by any convenient method, including dry blending the individual components and subsequently melt mixing or by pre-melt mixing in a separate extruder (e.g., a Banbury mixer, a Haake mixer, a Brabender internal mixer, or a twin screw extruder.

Another technique for making the compositions *in-situ* is via the interpolymerization of ethylene and $C_3$-$C_{20}$ alpha-olefins using a homogeneous (eg. constrained geometry) catalyst in at least one reactor and a heterogeneous (eg. Ziegler) catalyst in at least one other reactor. The reactors can be operated sequentially or in parallel.

The compositions can also be made by fractionating a heterogeneous ethylene/$\alpha$-olefin polymer into specific polymer fractions with each fraction having a narrow composition (i.e., branching) distribution, selecting the fraction having the specified properties (e.g., SHC $\geq$ 1.3), and blending the selected fraction in the appropriate amounts wich another ethylene polymer. This method is obviously not as economical as the *in-situ* interpolymerizations described above, but can be used to obtain the compositions of the invention.

## Fabricated Articles Made from the Novel Compositions

Many useful fabricated articles benefit from the novel compositions disclosed herein. For example, molding operations can be used to form useful fabricated articles or parts from the compositions disclosed herein, including various injection molding processes (e.g., that described in Modern Plastics Encyclopedia/89, Mid October 1988 Issue, Volume 65, Number 11, pp. 264-268, "Introduction to Injection Molding" by H. Randall Parker and on pp. 270-271, "Injection Molding Thermoplastics" by Michael W. Green and blow molding processes (e.g., that described in Modern Plastics Encyclopedia/89, Mid October 1988 Issue, Volume 65, Number 11, pp. 217-218, "Extrusion-Blow Molding" by Christopher Irwin, profile extrusion, calandering, and pultrusion (e.g., pipes) . Rotomolded articles can also benefit from the novel compositions described herein. Rotomolding techniques are well known to those skilled in the art and include, for example, those described in Modern Plastics Encyclopedia/89, Mid October 1988 Issue, Volume 65, Number 11, pp. 296-301, "Rotational Molding" by R.L. Fair.

Fibers (e.g., staple fibers, melt blown fibers or spunbonded fibers (using, e.g., systems as disclosed in U.S. Patent No. 4,340,563, U. S. Patent No. 4,663,220, U. S. Patent No. 4,668,566, or U. S. Patent No. 4,322,027, and gel spun fibers (e.g., the system disclosed in U. S. Patent No. 4,413,110), both woven and nonwoven fabrics (e.g., spunlaced fabrics disclosed in U. S. Patent No. 3,485,706) or structures made from such fibers (including, e.g., blends of these fibers with other fibers, e.g., PET or cotton)) can also be made from the novel compositions disclosed herein.

Film and film structures particularly benefit from the novel compositions described herein and can be made using conventional hot blown film fabrication techniques or other biaxial orientation processes such as tenter frames or double bubble processes. Conventional hot blown film processes are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing process such as described in a "double bubble"process as in U.S. Patent 3,456,044 (Pahlke), and the processes described in U.S. Patent 4,352,849 (Mueller), U.S. Patent 4,597,920 (Golike), U.S. Patent 4,820,557 (Warren), U.S. Patent 4,837,084 (Warren), U.S. Patent 4,865,902 (Golike et al.), U.S. Patent 4,927,708 (Herran et al.), U.S. Patent 4,952,451 (Mueller), U.S. Patent 4,963,419 (Lustig et al.), and U.S. Patent 5,059,481 (Lustig et al.), can also be used to make film structures from the novel compositions described herein. The film structures can also be made as described in a tenter-frame technique, such as that used for oriented polypropylene.

Other multi-layer film manufacturing techniques for food packaging applications are described in Packaging Foods With Plastics, by Wilmer A. Jenkins and James P. Harrington (1991), pp. 19-27, and in "Coextrusion Basics" by Thomas I. Butler, Film Extrusion Manual: Process, Materials, Properties pp. 31-80 (published by TAPPI Press (1992)).

The films may be monolayer or multilayer films. The film made from the novel compositions can also be coextruded with the other layer(s) or the film can be laminated onto another layer(s) in a secondary operation, such as that described in Packaging Foods With Plastics, by Wilmer A. Jenkins and James P. Harrington (1991) or that described in "Coextrusion For Barrier Packaging" by W.J. Schrenk and C.R. Finch, Society of Plastics Engineers RETEC Proceedings, June 15-17 (1981), pp. 211-229. If a monolayer film is produced via tubular film (i.e., blown film techniques) or flat die (i.e., cast film) as described by K.R. Osborn and W.A. Jenkins in "Plastic Films, Technology and Packaging Application" (Technomic Publishing Co., Inc. (1992)), the disclosure of which is incorporated herein by reference, then the film must go through an additional post-extrusion step of adhesive or extrusion lamination to other packaging material layers to form a multilayer structure. If the film is a coextrusion of two or more layers (also decribed by Osborn and Jenkins), the film may still be laminated to additional layers of packaging materials, depending on the other physical requirements of the final film. "Laminations Vs. Coextrusion" by D. Dumbleton (Converting Magazine (September 1992), also dicusses lamination versus coextrusion. Monolayer and coextruded films can also go through other post extrusion techniques, such as a biaxial orientation process.

Extrusion coating is yet another technique for producing multilayer film structures using the novel compositions described herein. The novel compositions comprise at least one layer of the film structure. Similar to cast film, extrusion coating is a flat die technique. A sealant can be extrusion coated onto a substrate either in the form of a monolayer or a coextruded extrudate.

Generally for a multilayer film structure, the novel compositions described herein comprise at least one layer of the total multilayer film structure. Other layers of the multilayer structure include but are not limited to barrier layers, and/or tie layers, and/or structural layers. Various materials can be used for these layers, with some of them being used as more than one layer in the same film structure. Some of these materials include: foil, nylon, ethylene/vinyl alcohol (EVOH) copolymers, polyvinylidene chloride (PVDC), polyethylene terepthalate (PET), oriented polypropylene (OPP), ethylene/vinyl acetate (EVA) copolymers, ethylene/acrylic acid (EAA) copolymers, ethylene/methacrylic acid (EMAA) copolymers, LLDPE, HDPE. LDPE, nylon, graft adhesive polymers (e.g., maleic anhydride grafted polyethylene), and paper. Generally, the multilayer film structures comprises from 2 to 7 layers.

Example 1

Seventy five percent (by weight of the total composition) of a homogeneously branched substantially linear ethylene/1-octene copolymer having $I_2$ of 1g/10 min, density of 0.91 $g/cm^3$, $I_{10}/I_2$ of 10, $M_w/M_n$ of 2, and SHC of 1.81, prepared in accordance with the techniques set for in U.S. Patent No. 5,272,236 via a solution polymerization process utilizing a $[\{(CH_3)_4C_5\}-(CH_3)_2Si-N-(t-C_4H_9)]Ti(CH_3)_2$ organometallic catalyst activated with tris(perfluorophenyl)borane, is dry blended and then melt blended with 25 percent (by weight of the total composition) of DOWLEX$^{TM}$ 2038 (a heterogeneously branched ethylene/1-octene copolymer having $I_2$ of 1 g/10 min, density of 0.935 $g/cm^3$, $I_{10}/I_2$ of 7.8, and $M_w/M_n$ of 3.4 (available from The Dow Chemical Company)). The heterogeneously branched ethylene/1-octene copolymer has a fraction of about 5 percent (by weight of the heterogeneously branched copolymer) having a SHC $\geq$ 1.3. The dry blend is tumble blended in a 50 gallon (190 L) drum for about 1 hour.

The melt blend is produced in a ZSK 30 twin screw extruder (30 mm screw diameter) and is then fabricated into film. The final blended composition has a density of 0.919 $g/cm^3$.

The blended composition is then fabricated into blown film having a thickness of about 1 mil (0.03 mm) on an Egan Blown Film Line having a 2 inch (5 cm) diameter screw, a 3 inch (8 cm) die and at a 2.5 inch (6.4 cm) blow up ratio (BUR), as described in Table 2. For all film samples in Examples 1, 2, 4, and 6 and for comparative examples 3, 5, and 7, the targeted gauge is about 1 mil (0.03 mm), using a blow-up ratio (BUR) of 2.5:1, a LLDPE screw design is used, a die gap of 70 mils (1.8 mm) is used, and a lay flat of 11.875 inches (30.163 cm) is used.

Film properties are measured and reported in Table 3 with other examples of the invention and with comparative examples. Dart impact (type A) of the films is measured in accordance with ASTM D-1709-85; tensile strength, yield, toughness, and 2% secant modulus of the films is measured in accordance with ASTM D-882; Elmendorf tear (type B) is measured in accordance with ASTM D-1922; PPT tear is measured in accordance with ASTM D-2582; Block is measured in accordance with ASTM D-3354.

Puncture is measured by using an Instron tensiometer Tensile Tester with an integrator, a specimen holder that holds the film sample taut across a circular opening, and a rod-like puncturing device with a rounded tip (ball) which is attached to the cross-head of the Instron and impinges perpendicularly onto the film sample. The Instron is set to obtain a crosshead speed of 10 inches/minute (25 cm/minute) and a chart speed (if used) of 10 inches/minute (25 cm/minute). Load range of 50% of the load cell capacity (100 lb. (45 kg) load for these tests) should be used. The puncturing device is installed to the Instron such that the clamping unit is attached to the lower mount and the ball is attached to the upper mount on the crosshead. Six film specimens are used (each 6 inches (15 cm) square). The specimen is clamped in the film holder and the film holder is secured to the mounting bracket. The crosshead travel is set and continues until the specimen breaks. Puncture resistance is defined as the energy to puncture divided by the volume of the film under test. Puncture resistance (PR) is calculated as follows:

$$PR = E/((12)(T)(A))$$

where PR = puncture resistance (ft-lbs/in$^3$)
E = energy (inch-lbs) = area under the load displacement curve
12 = inches/foot
T = film thickness (inches), and
A = area of the film sample in the clamp = 12.56 in$^2$.

Puncture resistance, as expressed in J/cm3 equals puncture resistance as expressed in ft-lbs/in$^3$ multiplied by 0.082737 J·in$^3$/ft-lb·cm$^3$.

Example 2

Seventy five percent (by weight of the total composition) of a homogeneously branched substantial linear ethylene/1-octene copolymer having $I_2$ of 0.5 g/10 min, density of 0.915 g/cm$^3$, $I_{10}/I_2$ of 11, $M_w/M_n$ of 2.4, and SHC of 2.265, prepared in accordance with the techniques set forth in U.S. Patent No. 5,272,236 via a solution polymerization process utilizing $[\{(CH_3)_4C_5\}-(CH_3)_2Si-N-(t-C_4H_9)]Ti(CH_3)_2$ organometallic catalyst activated with tris(perfluorophenyl)borane, is dry blended and then melt blended (as described in Example 1) with 25 percent (by weight of the total composition) of DOWLEX$^{TM}$ 2038, a heterogeneously branched ethylene/1-octene copolymer having $I_2$ of 1 g/10 min, density of 0.935 g/cm$^3$, $I_{10}/I_2$ of 7.8, and $M_w/M_n$ of 3.4 available from The Dow Chemical Company. The heterogeneously branched ethylene/1-octene copolymer has a fraction of 5 percent (by weight of the heterogeneously branched copolymer) having a SHC $\geq$ 1.3. The final blended composition has a density of 0.92 g/cm$^3$.

Blown film is made as described in Table 2 and film properties are measured and reported in Table 3 with other examples of the invention and with comparative examples.

Comparative Example 3

A heterogeneously branched ethylene/1-octene copolymer having $I_2$ of 1 g/10 min, density of 0.92 g/cm$^3$, $I_{10}/I_2$ of 7.93, and $M_w/M_n$ of 3.34, available from The Dow Chemical Company as DOWLEX$^{TM}$ 2056A, is made into film as described in Example 1. The heterogeneously branched ethylene/1-octene copolymer has a fraction of 36 percent (by weight of the heterogeneous copolymer) having a SHC $\geq$ 1.3. The entire heterogeneous ethylene/1-octene copolymer has a SHC of 1.5.

Blown film is made as described in Table 2 and film properties are measured and reported in Table 3 with other examples of the invention and with comparative examples.

Example 4

Example 4 is an *in-situ* blend made according to a continuous polymerization process.

Homogeneous Catalyst Preparation

A known weight of the constrained-geometry organometallic complex $[\{(CH_3)_4C_5\}-(CH_3)_2Si-N-(t-C_4H_9)]Ti(CH_3)_2$ is dissolved in Isopar$^{TM}$ E hydrocarbon (available from Exxon) to give a clear solution with a concentration of Ti of 0.001M. A similar solution of the activator complex, tris(perfluoropheny)borane (0.002M) is also prepared. A catalyst composition of a few mL total volume is prepared by adding 1.5 mL of Isopar$^{TM}$ E hydrocarbon solution of Ti reagent, 1.5 mL of the borane (for B:Ti = 2:1) and 2 mL of a heptane solution of methylaluminoxane (obtained commercially from Texas Alkyls as MMAO) containing 0.015 mmol Al to a 4 oz (100 ml) glass bottle. The solution is mixed for a few minutes and transferred by syringe to a catalyst injection cylinder on the polymerization reactor.

Heterogeneous Catalyst Preparation

A heterogeneous Ziegler-type catalyst was prepared substantially according to U. S. Patent No. 4,612,300 (Ex. P.), by sequentially adding to a volume of Isopar$^{TM}$ E hydrocarbon, a slurry of anhydrous magnesium chloride in Isopar$^{TM}$ E hydrocarbon, a solution of $EtAlCl_2$ in hexane, and a solution of $Ti(O-iPr)_4$ in Isopar$^{TM}$ E hydrocarbon, to yield a composition containing a magnesium concentration of 0.17M and a ratio of Mg/Al/Ti of 40/12/3. An aliquot of this composition containing 0.064 mmol of Ti which was treated with a dilute solution of $Et_3Al$ to give an active catalyst with a final Al/Ti ratio of 8/1. This slurry was then transferred to a syringe until it was required for injection into the polymerization reactor.

Polymerization

Ethylene is fed into a first reactor at a rate of 3/hr (1.4 kg/hr). Prior to introduction into the first reactor, the ethylene and a stream of hydrogen are combined with a diluent mixture comprising ISOPAR$^{TM}$ E hydrocarbon (available from Exxon) and 1-octene. With respect to the first reactor, the 1-octene:ethylene ratio is 8.3:1 (mole percent), the diluent: ethylene ratio is 13:1 (weight), and the hydrogen:ethylene ratio is 0.032:1 (mol %). A homogeneous constrained geometry catalyst and cocatalyst such as are described above are introduced into the first reactor. The catalyst and cocatalyst concentrations in the first reactor are 0.0001 and 0.0010 molar, respectively. The catalyst and cocatalyst flow rates into the first reactor are 0.37 lbs/hr (0.17 kg/hr) and 0.42 lbs/hr (0.19 kg/hr), respectively. The polymerization is conducted at a reaction temperature of 115°C. The polymer of the first reactor is an ethylene/1-octene copolymer and is estimated to have a density of 0.905 g/cm$^3$, a melt flow ratio ($I_{10}/I_2$) of about 8-10 and a molecular weight distribution ($M_w/M_n$) of 2.

The reaction product of the first reactor is transferred to a second reactor. The ethylene concentration in the exit stream from the first reactor is less than four percent, indicating the presence of long chain branching as described in U.S. Patent No. 5,272,236.

Ethylene is further fed into a second reactor at a rate of 3.0 lbs/hr (1.4 kg/hr). Prior to introduction into the second reactor, the ethylene and a stream of hydrogen are combined with a diluent mixture comprising ISOPAR$^{TM}$ E hydrocarbon (available from Exxon) and 1-octene. With respect to the second reactor, the 1-octene:ethylene ratio is 2.3:1 (mole percent), the diluent:ethylene ratio is 2.3:1 (weight), and the hydrogen:ethylene ratio is 0.280 (mole percent). A heterogeneous Ziegler catalyst and cocatalyst such as are described in Example 1 above are introduced into the second reactor. The catalyst and cocatalyst concentrations in the second reactor are 0.0004 and 0.0040 molar, respectively. The catalyst and cocatalyst flow rates into the second reactor are 0.56 lbs/hr (0.26 kg/hr) and 0.34 lbs/hr (0.16 kg/hr), respectively. The polymerization is conducted at a reaction temperature of 200°C. The polymer of the second reactor is an ethylene/1-octene copolymer and estimated to have a density of 0.94 g/cm$^3$ and a melt index ($I_2$) of 1.6 g/10 minutes.

The total composition comprises 50 percent by weight of the polymer of the first reactor and 50 percent by weight of the polymer of the second reactor. The total composition has a melt index ($I_2$) of 1.05 g/10 minutes, a density of 0.9245 g/cm$^3$, a melt low ratio ($I_{10}/I_2$) of 7.4, and a molecular weight distribution ($M_w/M_n$ of 2.6. This composition is made into blown film as described in Table 2 and the resultant film properties are reported in Table 3.

Comparative Example 5

Comparative Example 5 is an ethylene/1-octene copolymer made according to US Patent Number 5,250,612. About 15% (by weight of the total composition) is made in a first reactor, with the remaining portion of the composition polymerized in a second sequentially operated reactor. Both reactors utilize Ziegler type catalysts and make heterogeneously branched polymers. The total composition has a melt index ($I_2$) of 0.56 g/10 min., a density of 0.9256 g/cm$^3$, a melt flow ratio ($I_{10}/I_2$) of 9.5 and a molecular weight distribution ($M_w/M_n$) of 4.35. This composition is also made into blown film as described in Table 2 and the resultant film properties are reported in Table 3.

Example 6

Example 6 is an *in-situ* blend made according to a continuous polymerization process. In particular, ethylene is fed into a first reactor at a rate of 52 1b/hr (24 kg/hr). Prior to introduction into the first reactor, the ethylene is combined with a diluent mixture comprising ISOPAR$^{TM}$ E hydrocarbon (available from Exxon) and 1-octene. With respect to the first reactor, the 1-octene:ethylene ratio is 9.6:1 (mole percent) and the diluent:ethylene ratio is 9.9:1 (weight). A homogeneous constrained geometry catalyst and cocatalyst such as are described in Example 4 above and introduced into the first reactor. The catalyst and cocatalyst concentrations in the first reactor are 0.0030 and 0.0113 molar, respectively. The catalyst and cocatalyst flow rates into the first reactor are 0.537 lbs/hr (0.224 kg/hr) and 0.511 lbs/hr (0.232 kg/hr), respectively. The polymerization is conducted at a reaction temperature of 120°C. The polymer of the first reactor is an ethylene/1-octene copolymer and is estimated to have a density of 0.906 g/cm$^3$, a melt flow ratio ($I_{10}/I_2$) of about 8-10 and a molecular weight distribution ($M_w/M_n$) of 2.2.

The reaction product of the first reactor is transferred to a second reactor. The ethylene concentration in the exit stream from the first reactor is less than four percent, indicating the presence of long chain branching as described in U.S. Patent No. 5,272,236.

Ethylene is further fed into a second reactor at a rate of 58 lbs/hr (26 kg/hr). Prior to introduction into the second reactor, the ethylene and a stream of hydrogen are combined with a diluent mixture comprising ISOPAR$^{TM}$ E hydrocarbon (available from Exxon) and 1-octene. With respect to the second reactor, the 1-octene:ethylene ratio is 2.9:1 (mole percent), the diluent:ethylene ratio is 2.8 (weight), and the hydrogen:ethylene ratio is 0.106 (mole percent). A heterogeneous Ziegler catalyst and cocatalyst such as are described in Example 4 above are introduced into the second reactor. The catalyst and cocatalyst concentrations in the second reactor are 0.0023 and 0.0221 molar, respectively. The catalyst and cocatalyst flow rates into the second reactor are 1.4 lbs/hr (0.64 kg/hr) and 0.858 lbs/hr (0.39 kg/hr), respectively. The polymerization is conducted at a reaction temperature of 190°C. The polymer of the second reactor is an ethylene/1-octene copolymer and estimated to have a density of 0.944 g/cm$^3$ and a melt index ($I_2$) of 1.5 g/10 minutes.

The total composition comprises 43 percent by weight of the polymer of the first reactor and 57 percent by weight of the polymer of the second reactor. The total composition has a melt index ($I_2$) of 0.53 g/10 minutes, a density of 0.9246 g/cm$^3$, a melt flow ratio ($I_{10}/I_2$) of 7.83, and a molecular weight distribution ($M_w/M_n$) of 2.8.

Comparative Example 7

Comparative Example 7 is an ethylene/1-octene copolymer made according to U.S. Patent Number 5,250,612. About 25% (by weight of the total composition) is made in a first reactor, with the remaining portion of the composition polymerized in a second sequentially operated reactor. Both reactors utilize Ziegler type catalysts and make heterogeneously branched polymers. The total composition has a melt index ($I_2$) of 0.49 g/10 min., a density of 0.9244 g/cm$^3$, a melt flow ratio ($I_{10}/I_2$) of 10 and a molecular weight distribution ($M_w/M_n$) of 4.78. This composition is also made into blown film as described in Table 2 and the resultant film properties are reported in Table 3.

Comparative Example 8

Comparative example 8 is a heterogeneously branched ethylene/1-octene copolymer having a melt index ($I_2$) of 1 g/10 minutes, a density of 0.9249 g/cm$^3$, a melt flow ratio ($I_{10}/I_2$) of 8 and a molecular weight distrubution ($M_w/M_n$) of 3.5.

Blown film is made as described in Table 2 and film properties are measured and reported in Table 3 with other examples of the invention and comparative examples.

Table 2

| | Ex. 1 | Ex. 2 | Comp. Ex. 3 | Ex. 4 | Comp. Ex. 5 | Ex. 6 | Comp. Ex. 7 | Comp. Ex. 8 |
|---|---|---|---|---|---|---|---|---|
| Zone 1A (°F/°C) | 300/150 | 300/150 | 300/150 | 300/150 | 300/150 | 300/150 | 300/150 | 300/150 |
| Zone 1B (°F/°C) | 450/232 | 451/233 | 475/233 | 474/246 | 475/246 | 475/246 | 475/246 | 474/246 |
| Zone 1C (°F/°C) | 450/232 | 450/232 | 475/246 | 475/246 | 475/246 | 475/246 | 475/246 | 475/246 |
| Zone 2A (°F/°C) | 450/232 | 450/232 | 475/246 | 474/246 | 475/246 | 475/246 | 475/246 | 475/246 |
| Zone 2B (°F/°C) | 450/232 | 450/232 | 455/235 | 475/246 | 475/246 | 475/246 | 475/246 | 475/246 |
| Zone 2C (°F/°C) | 450/232 | 450/232 | 475/246 | 475/246 | 475/246 | 475/246 | 475/246 | 475/246 |
| Zone 3 (°F/°C) | 451/233 | 452/233 | 474/246 | 477/247 | 477/244 | 476/247 | 476/247 | 474/246 |
| Zone 4 (°F/°C) | 450/232 | 450/232 | 473/245 | 475/246 | 475/246 | 475/246 | 475/246 | 475/246 |
| Zone 5 (°F/°C) | 450/232 | 450/232 | 475/246 | 475/246 | 475/246 | 475/246 | 475/246 | 475/246 |
| Melt temp. (°F/°C) | 475/246 | 477/247 | 515/268 | 501/261 | 502/261 | 499/259 | 499/259 | 497/258 |
| Blower Air temp. (°F/°C) | 47.3/8.5 | 45.7/761 | 57/14 | 44.4/6.89 | 86.5/30.3 | 47.6/8.67 | NA | 47.3/8.5 |
| Chill Water temp. (°F/°C) | 39/3.9 | 37.6/0.62 | 51.1/10.6 | 38.3/3.5 | 86.8/30.4 | 40/4.4 | 38.7/3.72 | 40.5/4.72 |
| Extruder Die press. (psi/kPa) | 2843/19600 | 3427/23630 | 1321/9108 | 1874/12930 | 1763/12160 | 2883/19880 | 2525/17410 | 1952/13460 |
| Nozzle press. (in./cm.) | 3.2/8.1 | 4.5/11 | 4.38/1.75 | 4.4/11 | 4.9/12 | 4.6/12 | 4.6/12 | 4.3/11 |
| Amps | 27.3 | 33.1 | 37.7 | 39.9 | 40.2 | 50.1 | 42.6 | 38.6 |
| Extruder speed (rpm) | 27.6 | 28.8 | 21.5 | 23.1 | 21.1 | 21.5 | 22.1 | 21.7 |
| Nip Roll speed (rpm) | 33.1 | 36.9 | 39 | 39.8 | 36.2 | 37 | 36 | 37.8 |
| Output (lbs per hr/kg per hr) | 31/14 | NR* | 38.3/17.4 | 39/18 | NR* | 36 16 | 36/16 | 36/16 |
| Frost line height (in./cm.) | 12.5/1.8 | 9/23 | 13/33 | 12/30 | 12/30 | 10.5/26.7 | 11/28 | 10.5/26.7 |

*NR = Not recorded

Table 3

| | Ex . 1 | Ex. 2 | Comp. Ex. 3 | Ex. 4 | Comp. Ex. 5 | Ex. 6 | Comp. Ex . 7 | Comp. Ex . 8 |
|---|---|---|---|---|---|---|---|---|
| Yield (MD*) (psi/kPa) | 1605/11070 | 1595/11000 | 1643/11330 | 2040/14065 | 2243/15460 | 1973/13600 | 1810/12480 | 1782/12290 |
| Tensile (MD*) (psi/kPa) | 8522/58760 | 9525/65670 | 7444/51320 | 7794/53740 | 7931/54680 | 9325/64294 | 8455/58300 | 4928/33980 |
| Toughness (MD*) (ft-lbs/in$^3$ / m-kg/cm$^3$) | 1689/69.25 | 1773/72.69 | 1439/59.00 | 1671/68.51 | 1519/62.28 | NR | NR | NR |
| Yield (CD**) (psi/kPa) | 1530/10550 | 1489/10270 | 1706/11760 | 2267/15630 | 2407/16600 | 1997/13770 | 1809/12470 | 1832/12630 |
| Tensile (CD**) (psi/kPa) | 6252/43110 | 7603/52420 | 580740040 | 7079/48810 | 7458/51420 | 7153/49320 | 6326/43620 | 4598/31700 |
| Toughness (CD**) (ft-lbs/in$^3$ / J/cm$^3$) | 1282/106.1 | 1599/132.3 | 1358/112.4 | 1656/137.0 | 1495/123.7 | NR | NR | NR |
| Elmendorf B (MD**) (grams) | 288 | 216 | 334 | 317 | 194 | 320 | 398 | 297 |
| Elmendorf B (CD**) (grams) | 621 | 566 | 413 | 630 | 664 | 640 | 621 | 527 |
| PPT Tear (MD*) (lbs./kg.) | 6.79/3.08 | 6.18/2.80 | 5.99/2.72 | 6.2/2.8 | 6.5/2.9 | 6.2/2.8 | 6.2/2.8 | 5.3/2.4 |
| PPT Tear (CD**) (lbs./kg.) | 7.44/3.37 | 7.42/3.37 | 6.46/2.93 | 6.8/3.08 | 8.1/3.7 | 7.0/3.2 | 7.5/3.4 | 6.1/2.8 |
| Dart Impact A (grams) | 708 | 610 | 354 | 410 | 186 | 412 | 186 | 164 |
| Puncture (ft-lbs/in$^3$ / J/cm$^3$) | 316/26.1 | 349/28.9 | 251/20.8 | 231/19.1 | 256/21.2 | 250/20.7 | 227/18.8 | 237/19.6 |
| Film Block (grams) | 75 | 33 | 87 | 32 | 17 | 11.8 | 17 | 22 |
| Film Gradient Density (g/cm$^3$) | 0.9145 | 0.9153 | 0.9155 | 0.9205 | 0.9218 | 0.9198 | 0.9201 | 0.9207 |
| Film Gauge (low) (mils/mm) | 0.9/0.02 | 0.9/0.02 | 0.9/0.02 | 0.85/0.022 | 0.8/0.022 | 0.98/0.025 | 0.95/0.024 | 1.05/0.027 |
| Film Gauge (high) (mils/mm) | 1.2/0.03 | 1.05/0.027 | 1.1/0.028 | 0.95/0.024 | 1/0.025 | 1.08/0.027 | 1.05/0.027 | 1.15/0.029 |

*MD = Machine direction
**CD = Cross direction
NR = Not Recorded

In general, films made from the novel formulated ethylene/α-olefin compositions exhibit good impact and tensile properties, and an especially good combination of tensile, yield and toughness (e.g., toughness and dart impact). Further, films from the example resins exhibited significant improvements over films made from the comparative resins in a number of key properties.

For example, comparing examples 1 and 2 with comparative example 3, the data show films produced from the melt blends (examples 1 and 2) exhibited significantly higher values for the following film properties: dart impact, MD tensile, CD tensile, MD toughness, CD toughness MD ppt tear, DC ppt tear, CD Elmendorf tear B, puncture and significantly lower block.

Comparing example 4 to comparative example 5, the data show films produced from the *in-situ* blend exhibited significantly higher values for the following film properties: dart impact, MD toughness and CD toughness.

Comparing example 6 to comparative examples 7 and 8, the data show films produced from the *in-situ* blend exhibited significantly higher values for the following film properties: dart impact, MD yield, CD yield, MD tensile, CD tensile, CD Elmendorf tear B and puncture and significantly lower block.

## Claims

1. An ethylene polymer composition, comprising from 10 percent (by weight of the total composition) to 95 percent by weight of the total composition) of:

   (A) at least one homogeneously branched substantially linear ethylene/α-olefin interpolymer having:

   (i) a density from 0.88 grams/cubic centimeter (g/cm$^3$) to 0.935 g/cm$^3$,
   (ii) a molecular weight distribution ($M_w/M_n$) from 1.8 to 2.8,
   (iii) a melt index ($I_2$) from 0.001 grams/10 minutes (g/10 min) to 10 g/10 min,
   (iv) no linear polymer fraction, and
   (v) a single melting peak as measured during differential scanning calorimetry; and

   (B) from 5 percent (by weight of the total composition) to 90 percent (by weight of the total composition) of at least one heterogeneously branched ethylene polymer having a density from 0.91 g/cm$^3$ to 0.965 g/cm$^3$.

2. The ethylene polymer composition of claim 1, wherein the homogeneously branched substantially linear ethylene/α-olefin interpolymer is substituted with from 0.01 long-chain branches/1000 carbons to 3 long-chain branches/1000 carbons.

3. The composition of any of claim 1 or 2, wherein the homogeneously branched substantially linear ethylene/α-olefin interpolymer has a slope of strain hardening coefficient of from 1.3 to 10.

4. An ethylene polymer composition, comprising from 10 percent (by weight of the total composition) to 95 percent (by weight of the total composition) of:

   (A) at least one homogeneously branched linear ethylene/α-olefin interpolymer having:

   (i) a density from 0.88 grams/cubic centimeter (g/cm$^3$) to 0.935 g/cm$^3$,
   (ii) a molecular weight distribution ($M_w/M_n$) from 1.8 to 2.8,
   (iii) a melt index ($I_2$) from 0.001 grams/10 minutes (g/10 min) to 10 g/10 min,
   (iv) no linear polymer fraction,
   (v) a single melting peak as measured during differential scanning calorimetry,
   (vi) a short chain branching distribution index (SCBDI) of greater than 50 percent,
   (vii) a slope of strain hardening coefficient of from 1.3 to 10; and

   (B) from 5 percent (by weight of the total composition) to 90 percent (by weight of the total composition) of at least one heterogeneously branched ethylene polymer having a density from 0.91 g/cm$^3$ to 0.965 g/cm$^3$.

5. The composition of any of claims 1-4, wherein the heterogeneously branched ethylene polymer is an interpolymer of ethylene with at least one C$_3$-C$_{20}$ α-olefin.

6. The composition of any of claims 1-5, wherein the homogeneously branched substantially linear ethylene/α-olefin interpolymer or homogeneously branched linear ethylene α-olefin interpolymer is an interpolymer of ethylene with at least $C_3$-$C_{20}$ α-olefin,

7. The composition of either claims 1-6, wherein the homogeneously branched substantially linear ethylene/α-olefin interpolymer or homogeneously branched linear ethylene/α-olefin interpolymer is a copolymer of ethylene and a $C_3$-$C_{20}$ α-olefin.

8. The composition of either of claims 1-7, wherein the homogeneously branched substantially linear ethylene/α-olefin interpolymer or homogeneously branched linear ethylene/α-olefin interpolymer is a copolymer of ethylene and 1-octene.

9. The composition of either of claims 1-8, wherein the heterogeneously branched ethylene polymer is a copolymer of ethylene and a $C_3$-$C_{20}$ α-olefin.

10. The composition of either of claims 1-9, wherein the heterogeneously branched ethylene polymer is a copolymer of ethylene and 1-octene.

11. The composition of either of claims 1-10, wherein the composition, when fabricated into a film having a thickness of 0.022 to 0.024 mm, has a dart impact of greater than 410 grams.

12. An ethylene polymer composition comprising from 30 to 40 percent (by weight of the total composition) of at least one homogeneously branched substantially linear ethylene/α-olefin interpolymer having a melt index of from 2.5 to 4 g/10 minutes and a density of from 0.89 to 0.91 $g/cm^3$ or at least one homogeneously branched linear ethylene/α-olefin interpolymer having a melt index of from 2.5 to 4 g/10 minutes, a density of from 0.89 to 0.91 $g/cm^3$, and a slope of strain hardening coefficient of from 1.3 to 10; and from 60 to 70 percent (by weight of the total composition) of a heterogeneously branched ethylene/α-olefin interpolymer having a melt index of from 2.5 to 4 g/10 minutes and a density of from 0.91 to 0.93 $g/cm^3$, wherein said composition is characterized by a melt index of from 2.5 to 4 g/10 minutes and by a density of from 0.89 to 0.92 $g/cm^3$.

13. An ethylene polymer composition comprising from 40 to 50 percent (by weight of the total composition) of at least one homogeneously branched substantially linear ethylene/α-olefin interpolymer having a melt index of from 0.7 to 1.3 g/10 minutes and a density of from 0.89 to 0.91 $g/cm^3$, or at least one homogeneously branched linear ethylene/α-olefin interpolymer having a melt index of from 0.7 to 1.3 g/10 minutes, a density of from 0.89 to 0.91 $g/cm^3$ and a slope of strain hardening coefficient of from 1.3 to 10, and from 50 to 60 percent (by weight of the total composition) of a heterogeneously branched ethylene/α-olefin interpolymer having a melt index of from 2.3 to 3.7 g/10 minutes and a density of from 0.91 to 0.935 $g/cm^3$, wherein said composition is characterized by a melt index of from 1,5 to 2.5 g/10 minutes and by a density of from 0.90 to 0.93 $g/cm^3$.

14. An ethylene polymer composition comprising from 30 to 40 percent (by weight of the total composition) of at least one homogeneously branched substantially linear ethylene/α-olefin interpolymer having a melt index of from 0.3 to 0.7 g/10 minutes and a density of from 0.88 to 0.91 $g/cm^3$ or at least one homogeneously branched linear ethylene/α-olefin interpolymer having a melt index of from 0.3 to 0.7 g/10 minutes, a density of from 0.88 to 0.91 $g/cm^3$ and a slope of strain hardening coefficient of from 1.3 to 10, and from 60 to 70 percent (by weight of the total composition of a heterogeneously branched ethylene/α-olefin interpolymer having a melt index of from 0.8 to 1.4 g/10 minutes and a density of from 0.92 to 0.94 $g/cm^3$, wherein said composition is characterized by a melt index of from 0.7 to 1 g/10 minutes and by a density of from 0.90 to 0.93 $g/cm^3$.

15. The ethylene polymer composition of any of claims 12, 13 or 14, wherein the homogeneously branched ethylene/α-olefin interpolymer is substantially linear and is substituted with 0.1 long-chain branches/1000 carbons to 3 long-chain branches/1000 carbons.

16. A film comprising the composition of any of the preceding claims.

17. The film of claim 16 wherein the film is a biaxially oriented film.

18. The biaxially oriented film of claim 17 wherein the film is prepared by a hot blown film orientation technique.

19. The biaxially oriented film of claim 18 wherein the blown film orientation technique is a double bubble blown film method.

20. The biaxially oriented film of claim 17 wherein the film is prepared by a tenter frame orientation technique.

21. The composition of any of claims 1 to 15 wherein the composition is prepared by in-situ interpolymerizations using at least two reactors.

22. The composition of claim 21 wherein the at least two reactors are operated in parallel.

23. A biaxially oriented film comprising the composition of claim 21 or claim 22.

24. The composition of claim 3 or 4, wherein the slope of strain hardening coefficient (SHC) is greater than 1.5 and less than 2.5.

25. The composition of claim 21, wherein the at least two reactors are operated sequentially.


**Patentansprüche**

1. Ethylenpolymerzusammensetzung, umfassend von 10 Prozent (bezogen auf das Gewicht der gesamten Zusammensetzung) bis 95 Prozent (bezogen auf das Gewicht der gesamten Zusammensetzung):

   (A) mindestens eines homogen verzweigten im wesentlichen linearen Ethylen/$\alpha$-Olefin Interpolymers mit:

       (i) einer Dichte von 0,88 Gramm/Kubikzentimeter (g/cm$^3$) bis 0,935 g/cm$^3$,

       (ii) einer Molekulargewichtsverteilung ($M_w/M_n$) von 1,8 bis 2,8,

       (iii) einem Schmelzindex ($I_2$) von 0,001 Gramm/10 Minuten (g/10 min) bis 10 g/10 min,

       (iv) keinem Anteil von linearem Polymer, und

       (v) einem einzigen Schmelzpeak, wie bei Differentialscanningkalorimetrie bestimmt, und

   (B) von 5 Prozent (bezogen auf das Gewicht der gesamten Zusammensetzung) bis 90 Prozent (bezogen auf das Gewicht der gesamten Zusammensetzung) mindestens eines heterogen verzweigten Ethylenpolymers mit einer Dichte von 0,91 g/cm$^3$ bis 0,965 g/cm$^3$.

2. Ethylenpolymerzusammensetzung nach Anspruch 1, wobei das homogen verzweigte im wesentlichen lineare Ethylen/$\alpha$-Olefin Interpolymer mit 0,01 Langkettenzweigen/1000 Kohlenstoffe bis 3 Langkettenzweigen/1000 Kohlenstoffe substituiert ist.

3. Zusammensetzung nach einem der Ansprüche 1 oder 2, wobei das homogen verzweigte im wesentlichen lineare Ethylen$\alpha$-Olefin Interpolymer eine Steigung des Umformverfestigungskoeffizienten von 1,3 bis 10 hat.

4. Ethylenpolymerzusammensetzung, umfassend von 10 Prozent (bezogen auf das Gewicht der gesamten Zusammensetzung) bis 95 Prozent (bezogen auf das Gewicht der gesamten Zusammensetzung):

   (A) mindestens eines homogen verzweigten linearen Ethylen/$\alpha$-Olefin Interpolymers mit:

       (i) einer Dichte von 0,88 Gramm/Kubikzentimeter (g/cm$^3$) bis 0,935 g/cm$^3$,

       (ii) einer Molekulargewichtsverteilung ($M_w/M_n$) von 1,8 bis 2,8,

       (iii) einem Schmelzindex ($I_2$) von 0,001 Gramm/10 Minuten (g/10 min) bis 10 g/10 min,

       (iv) keinem Anteil von linearem Polymer,

(v) einem einzigen Schmelzpeak, wie bei Differentialscanningkalorimetrie bestimmt,

(vi) einem Verteilungsindex der Kurzkettenverzweigung (SCBDI) von mehr als 50 Prozent,

(vii) einer Steigung des Umformverfestigungskoeffizienten von 1,3 bis 10, und

(B) von 5 Prozent (bezogen auf das Gewicht der gesamten Zusammensetzung) bis 90 Prozent (bezogen auf das Gewicht der gesamten Zusammensetzung) mindestens eines heterogen verzweigten Ethylenpolymers mit einer Dichte vqn 0,91 g/cm$^3$ bis 0,965 g/cm$^3$.

5. Zusammensetzung nach einem der Ansprüche 1 bis 4, wobei das heterogen verzweigte Ethylenpolymer ein Interpolymer von Ethylen mit mindestens einem $C_3$-$C_{20}$ $\alpha$-Olefin ist.

6. Zusammensetzung nach einem der Ansprüche 1 bis 5, wobei das homogen verzweigte im wesentlichen lineare Ethylen/$\alpha$-Olefin Interpolymer oder homogen verzweigte lineare Ethylen/$\alpha$-Olefin Interpolymer ein Interpolymer von Ethylen mit mindestens einem $C_3$-$C_{20}$ $\alpha$-Olefin ist.

7. Zusammensetzung nach einem der Ansprüche 1 bis 6, wobei das homogen verzweigte im wesentlichen lineare Ethylen/$\alpha$-Olefin Interpolymer oder homogen verzweigte lineare Ethylen/$\alpha$-Olefin Interpolymer ein Copolymer von Ethylen und einem $C_3$-$C_{20}$ $\alpha$-Olefin ist.

8. Zusammensetzung nach einem der Ansprüche 1 bis 7, wobei das homogen verzweigte im wesentlichen lineare Ethylen/$\alpha$-Olefin Interpolymer oder homogen verzweigte lineare Ethylen/$\alpha$-Olefin Interpolymer ein Copolymer von Ethylen und 1-Octen ist.

9. Zusammensetzung nach einem der Ansprüche 1 bis 8, wobei das heterogen verzweigte Ethylenpolymer ein Copolymer von Ethylen und einem $C_3$-$C_{20}$ $\alpha$-Olefin ist.

10. Zusammensetzung nach einem der Ansprüche 1 bis 9, wobei das heterogen verzweigte Ethylenpolymer ein Copolymer von Ethylen und 1-Octen ist.

11. Zusammensetzung nach einem der Ansprüche 1 bis 10, wobei die Zusammensetzung nach Verarbeitung zu einer Folie mit einer Schichtdicke von 0,022 bis 0,024 mm eine Aufprallschlagfestigkeit von mehr als 410 Gramm hat.

12. Ethylenpolymerzusammensetzung, umfassend 30 bis 40 Prozent (bezogen auf das Gewicht der gesamten Zusammensetzung) mindestens eines homogen verzweigten im wesentlichen linearen Ethylen/$\alpha$-Olefin Interpolymers mit einem Schmelzindex von 2,5 bis 4 g/10 Minuten und einer Dichte von 0,89 bis 0,91 g/cm$^3$ oder mindestens eines homogen verzweigten linearen Ethylen/$\alpha$-Olefin Interpolymers mit einem Schmelzindex von 2,5 bis 4 g/10 Minuten, einer Dichte von 0,89 bis 0,91 g/cm$^3$ und einer Steigung des Umformverfestigungskoeffizienten von 1,3 bis 10, und von 60 bis 70 Prozent (bezogen auf das Gewicht der gesamten Zusammensetzung) eines heterogen verzweigten Ethylen/$\alpha$-Olefin Interpolymers mit einem Schmelzindex von 2,5 bis 4 g/10 Minuten und einer Dichte von 0,91 bis 0,93 g/cm$^3$, wobei die Zusammensetzung durch einen Schmelzindex von 2,5 bis 4 g/10 Minuten und eine Dichte von 0,89 bis 0,92 g/cm$^3$ gekennzeichnet ist.

13. Ethylenpolymerzusammensetzung, umfassend 40 bis 50 Prozent (bezogen auf das Gewicht der gesamten Zusammensetzung) mindestens eines homogen verzweigten im wesentlichen linearen Ethylen/$\alpha$-Olefin Interpolymers mit einem Schmelzindex von 0,7 bis 1,3 g/10 Minuten und einer Dichte von 0,89 bis 0,91 g/cm$^3$ oder mindestens eines homogen verzweigten linearen Ethylen/$\alpha$-Olefin Interpolymers mit einem Schmelzindex von 0,7 bis 1,3 g/10 Minuten, einer Dichte von 0,89 bis 0,91 g/cm$^3$ und einer Steigung des Umformverfestigungskoeffizienten von 1,3 bis 10, und von 50 bis 60 Prozent (bezogen auf das Gewicht der gesamten Zusammensetzung) eines heterogen verzweigten Ethylen/$\alpha$-Olefin Interpolymers mit einem Schmelzindex von 2,3 bis 3,7 g/10 Minuten und einer Dichte von 0,91 bis 0,935 g/cm$^3$, wobei die Zusammensetzung durch einen Schmelzindex von 1,5 bis 2,5 g/10 Minuten und eine Dichte von 0,90 bis 0,93 g/cm$^3$ gekennzeichnet ist.

14. Ethylenpolymerzusammensetzung, umfassend 30 bis 40 Prozent (bezogen auf das Gewicht der gesamten Zusammensetzung) mindestens eines homogen verzweigten im wesentlichen linearen Ethylen/$\alpha$-Olefin Interpolymers mit einem Schmelzindex von 0,3 bis 0,7 g/10 Minuten und einer Dichte von 0,88 bis 0,91 g/cm$^3$ oder mindestens eines homogen verzweigten linearen Ethylen/$\alpha$-Olefin Interpolymers mit einem Schmelzindex von 0,3 bis 0,7 g/10 Minuten, einer Dichte von 0,88 bis 0,91 g/cm$^3$ und einer Steigung des Umformverfestigungskoeffizienten von 1,3 bis 10, und von 60 bis 70 Prozent (bezogen auf das Gewicht der gesamten Zusammensetzung) eines heterogen verzweigten Ethylen/$\alpha$-Olefin Interpolymers mit einem Schmelzindex von 0,8 bis 1,4 g/10 Minuten und einer Dichte von 0,92 bis 0,94 g/cm$^3$, wobei die Zusammensetzung durch einen Schmelzindex von 0,7 bis 1 g/10 Minuten und eine Dichte von 0,90 bis 0,93 g/cm$^3$ gekennzeichnet ist.

15. Ethylenpolymerzusammensetzung nach einem der Ansprüche 12, 13 oder 14, wobei das homogen verzweigte Ethylen/$\alpha$-Olefin Interpolymer im wesentlichen linear ist und mit 0,1 Langkettenzweigen/1000 Kohlenstoffe bis 3 Langkettenzweigen/1000 Kohlenstoffe substituiert ist.

16. Folie, umfassend die Zusammensetzung nach einem der vorhergehenden Ansprüche.

17. Folie nach Anspruch 16, wobei die Folie eine zweiachsig gereckte Folie ist.

18. Zweiachsig gereckte Folie nach Anspruch 17, wobei die Folie mittels einer Warmblasfolienrecktechnik hergestellt ist.

19. Zweiachsig gereckte Folie nach Anspruch 18, wobei die Blasfolienrecktechnik ein Double Bubble Folienblasverfahren ist.

20. Zweiachsig gereckte Folie nach Anspruch 17, wobei die Folie mittels einer Spannrahmenrecktechnik hergestellt ist.

21. Zusammensetzung nach einem der Ansprüche 1 bis 15, wobei die Zusammensetzung mittels in-situ Interpolymerisationen unter Verwendung von mindestens zwei Reaktoren hergestellt ist.

22. Zusammensetzung nach Anspruch 21, wobei die mindestens zwei Reaktoren parallel betrieben werden.

23. Zweiachsig gereckte Folie, umfassend die Zusammensetzung nach Anspruch 21 oder Anspruch 22.

24. Zusammensetzung nach Anspruch 3 oder 4, wobei die Steigung des Umformverfestigungskoeffizienten (SHC) größer als 1,5 und kleiner als 2,5 ist.

25. Zusammensetzung nach Anspruch 21, wobei die mindestens zwei Reaktoren in Reihe betrieben werden.


**Revendications**

1. Composition à base de polymères d'éthylène, qui comprend :

   (A) 10 % en poids à 95 % en poids (par rapport au poids de la composition totale) d'au moins un interpolymère d'éthylène et d'$\alpha$-oléfine, pratiquement linéaire, ramifié de manière homogène, ayant :

   (i) une masse volumique de 0,88 gramme/centimètre cube (g/cm$^3$) à 0,935 g/cm$^3$,
   (ii) un indice de polymolécularité (M$_p$/M$_n$) de 1,8 à 2,8,
   (iii) un indice de fluidité à l'état fondu (I$_2$) de 0,001 gramme/10 minutes (g/10 min) à 10 g/10 min,
   (iv) ne présentant pas de fraction de polymère linéaire, et
   (v) présentant en analyse calorimétrique différentielle un pic de fusion unique ; et

   (B) 5 % en poids à 90 % en poids (par rapport au poids de la composition totale) d'au moins un polymère d'éthylène ramifié de manière hétérogène, ayant une masse volumique de 0,91 g/cm$^3$ à 0,965 g/cm$^3$.

2. Composition à base de polymères d'éthylène selon la revendication 1, dans laquelle l'interpolymère d'éthylène et d'$\alpha$-oléfine, pratiquement linéaire, ramifié de manière homogène, est un polymère substitué par 0,01 ramification à longue chaîne à 3 ramifications à longue chaîne pour 1000 atomes de carbone.

3. Composition selon la revendication 1 ou 2, pour laquelle l'interpolymère d'éthylène et d'$\alpha$-oléfine, pratiquement linéaire, ramifié de manière homogène, présente un coefficient de pente de durcissement de déformation de 1,3 à 10.

4. Composition à base de polymères d'éthylène, qui comprend :

(A) 10 % en poids à 95 % en poids (par rapport au poids de la composition totale) d'au moins un interpolymère d'éthylène et d'$\alpha$-oléfine, linéaire, ramifié de manière homogène, ayant :

(i) une masse volumique de 0,88 g/cm$^3$ à 0,935 g/cm$^3$,
(ii) un indice de polymolécularité ($M_p/M_n$) de 1,8 à 2,8,
(iii) un indice de fluidité à l'état fondu ($I_2$) de 0,001 g/10 min à 10 g/10 min,
(iv) n'ayant pas de fraction de polymère linéaire, et présentant :
(v) un pic unique de fusion en analyse calorimétrique différentielle,
(vi) un indice de distribution des ramifications à chaîne courte (SCBDI) supérieur à 50 %, et
(vii) un coefficient de pente de durcissement de déformation de 1,3 à 10 ; et

(B) 5 % en poids à 90 % en poids (par rapport au poids de la composition totale) d'au moins un polymère d'éthylène, ramifié de manière hétérogène, ayant une masse volumique de 0,91 g/cm$^3$ à 0,965 g/cm$^3$.

5. Composition selon l'une quelconque des revendications 1 à 4, dans laquelle le polymère d'éthylène ramifié de manière hétérogène est un interpolymère d'éthylène et d'au moins une $\alpha$-oléfine en $C_3$ à $C_{20}$.

6. Composition selon l'une quelconque des revendications 1 à 5, dans laquelle l'interpolymère d'éthylène et d'$\alpha$-oléfine, pratiquement linéaire, ramifié de manière homogène, ou l'interpolymère d'éthylène et d'$\alpha$-oléfine, linéaire, ramifié de manière homogène, est un interpolymère d'éthylène et d'au moins une $\alpha$-oléfine en $C_3$ à $C_{20}$.

7. Composition selon l'une quelconque des revendications 1 à 6, dans laquelle l'interpolymère d'éthylène et d'$\alpha$-oléfine, pratiquement linéaire, ramifié de manière homogène, ou l'interpolymère d'éthylène et d'$\alpha$-oléfine, linéaire, ramifié de manière homogène, est un copolymère d'éthylène et d'une $\alpha$-oléfine en $C_3$ à $C_{20}$.

8. Composition selon l'une quelconque des revendications 1 à 7, dans laquelle l'interpolymère d'éthylène et d'$\alpha$-oléfine, pratiquement linéaire, ramifié de manière homogène, ou l'interpolymère d'éthylène et d'$\alpha$-oléfine, linéaire, ramifié de manière homogène, est un copolymère d'éthylène et de 1-octène.

9. Composition selon l'une quelconque des revendications 1 à 8, dans laquelle le polymère d'éthylène, ramifié de manière hétérogène, est un copolymère d'éthylène et d'une $\alpha$-oléfine en $C_3$ à $C_{20}$.

10. Composition selon l'une quelconque des revendications 1 à 9, dans laquelle le polymère d'éthylène, ramifié de manière hétérogène, est un copolymère d'éthylène et de 1-octène.

11. Composition selon l'une quelconque des revendications 1 à 10, qui, lorsqu'elle est mise sous la forme d'un film ayant une épaisseur de 0,022 à 0,024 mm, présente une résistance au choc d'une pointe supérieure à 410 g.

12. Composition à base de polymères d'éthylène, qui comprend 30 à 40 % en poids (par rapport au poids de la composition totale) d'au moins un interpolymère d'éthylène et d'$\alpha$-oléfine, pratiquement linéaire, ramifié de manière homogène, ayant un indice de fluidité à l'état fondu de 2,5 à 4 g/10 minutes et une masse volumique de 0,89 à 0,91 g/cm$^3$, ou d'au moins un interpolymère d'éthylène et d'$\alpha$-oléfine, linéaire, ramifié de manière homogène, ayant un indice de fluidité à l'état fondu de 2,5 à 4 g/10 minutes, une masse volumique de 0,89 à 0,91 g/cm$^3$ et un coefficient de pente de durcissement de déformation de 1,3 à 10, et 60 à 70 % en poids (par rapport au poids de la composition totale) d'un interpolymère d'éthylène et d'a-oléfine, ramifié de manière hétérogène, ayant un indice de fluidité à l'état fondu de 2,5 à 4 g/10 minutes et une masse volumique de 0,91 à 0,93 g/cm$^3$, ladite composition étant caractérisée par un indice de fluidité à l'état fondu de 2,5 à 4 g/10 minutes et par une masse volumique de 0,89 à 0,92 g/cm$^3$.

13. Composition à base de polymères d'éthylène, qui comprend 40 à 50 % en poids (par rapport au poids de la composition totale) d'au moins un interpolymère d'éthylène et d'$\alpha$-oléfine, pratiquement linéaire, ramifié de manière homogène, ayant un indice de fluidité à l'état fondu de 0,7 à 1,3 g/10 minutes et une masse volumique de 0,89 à 0,91 g/cm$^3$, ou d'au moins un interpolymère d'éthylène et d'$\alpha$-oléfine, linéaire, ramifié de manière homogène, ayant un indice de fluidité à l'état fondu de 0,7 à 1,3 g/10 minutes, une masse volumique de 0,89 à 0,91 g/cm$^3$ et un coefficient de pente de durcissement de déformation de 1,3 à 10, et 50 à 60 % en poids (par rapport au poids de la composition totale) d'un interpolymère d'éthylène et d'$\alpha$-oléfine, ramifié de manière hétérogène, ayant un indice de fluidité à l'état fondu de 2,3 à 3,7 g/10 minutes et une masse volumique de 0,91 à 0,935 g/cm$^3$, ladite composition étant caractérisée par un indice de fluidité à l'état fondu de 1,5 à 2,5 g/10 minutes et par une masse volumique de 0,90 à 0,93 g/cm$^3$.

**14.** Composition à base de polymères d'éthylène, qui comprend 30 à 40 % en poids (par rapport au poids de la composition totale) d'au moins un interpolymère d'éthylène et d'$\alpha$-oléfine, pratiquement linéaire, ramifié de manière homogène, ayant un indice de fluidité à l'état fondu de 0,3 à 0,7 g/10 minutes et une masse volumique de 0,88 à 0,91 g/cm$^3$, ou d'au moins un interpolymère d'éthylène et d'$\alpha$-oléfine, linéaire, ramifié de manière homogène, ayant un indice de fluidité à l'état fondu de 0,3 à 0,7 g/10 minutes, une masse volumique de 0,88 à 0,91 g/cm$^3$ et un coefficient de pente de durcissement de déformation de 1,3 à 10, et 60 à 70 % en poids (par rapport au poids de la composition totale) d'un interpolymère d'éthylène et d'a-oléfine, ramifié de manière hétérogène, ayant un indice de fluidité à l'état fondu de 0,8 à 1,4 g/10 minutes et une masse volumique de 0,92 à 0,94 g/cm$^3$, ladite composition étant caractérisée par un indice de fluidité à l'état fondu de 0,7 à 1 g/10 minutes et par une masse volumique de 0,90 à 0,93 g/cm$^3$.

**15.** Composition à base de polymères d'éthylène selon l'une quelconque des revendications 12 à 14, pour laquelle l'interpolymère d'éthylène et d'$\alpha$-oléfine, ramifié de manière homogène, est pratiquement linéaire et est substitué par 0,1 ramification à longue chaîne à 3 ramifications à longue chaîne pour 1000 atomes de carbone.

**16.** Film renfermant une composition selon l'une quelconque des revendications précédentes.

**17.** Film selon la revendication 16, qui est un film biaxialement orienté.

**18.** Film biaxialement orienté selon la revendication 17, qui est préparé par une technique d'orientation de film par soufflage à chaud.

**19.** Film biaxialement orienté selon la revendication 18, pour lequel la technique d'orientation du film par soufflage est un procédé de formation de film soufflé à double bulle.

**20.** Film biaxialement orienté selon la revendication 17, qui est préparé par une technique d'orientation à l'aide d'un cadre élargisseur.

**21.** Composition selon l'une quelconque des revendications 1 à 15, qui est préparée par des interpolymérisations in situ, utilisant au moins deux réacteurs.

**22.** Composition selon la revendication 21, pour laquelle on fait fonctionner les au moins deux réacteurs en parallèle.

**23.** Film biaxialement orienté renfermant une composition selon la revendication 21 ou 22.

**24.** Composition selon la revendication 3 ou 4, pour laquelle le coefficient de pente de durcissement de déformation (SHC) est supérieur à 1,5 et inférieur à 2,5.

**25.** Composition selon la revendication 21, pour laquelle on fait fonctionner les au moins deux réacteurs successivement.

# FIG. I

EP 0 696 300 B1

# FIG. 2

DOWLEX® 2045

HOMOGENEOUSLY BRANCHED
SUBSTANTIALLY LINEAR
POLYMER

TEMPERATURE (°C)

EP 0 696 300 B1